# EUROPÄISCHE PATENTSCHRIFT

(11) **EP 1 037 950 B1**
(45) Veröffentlichungstag und Bekanntmachung des Hinweises auf die Patenterteilung: **26.05.2004**
(21) Anmeldenummer: 99952606.4
(22) Anmeldetag: 19.10.1999
(51) Int. Cl.: C09D 11/16, C09D 11/00

(54) **UV- UND WASSERBESTÄNDIGE TINTE BZW. TUSCHE**
UV AND WATER-RESISTANT INK OR CHINA INK
ENCRE, EVENTUELLEMENT ENCRE DE CHINE, RESISTANT AUX U.V. ET A L'EAU

(30) Priorität: 20.10.1998 DE 19848273
(43) Veröffentlichungstag der Anmeldung: 27.09.2000
(73) Patentinhaber: Emby Anstalt, 9494 Schaan (LI)
(72) Erfinder: Blasi, Ulrich Martin, 6811 Göfis (AT)
(74) Vertreter: Preissner, Nicolaus, Dipl.-Ing.
(86) Internationale Anmeldenummer: PCT/EP1999/007916
(87) Internationale Veröffentlichungsnummer: WO 2000/023532

(56) Entgegenhaltungen:
- EP-A- 0 685 538
- EP-A- 0 767 225
- US-A- 4 365 035

## Beschreibung

Die vorliegende Erfindung betrifft pigmentfreie UV- und wasserbeständige Farbflüssigkeiten für Faser-, Filz-, Kugelschreiber, Füllhalter sowie für Tintenstrahlverfahren. Insbesondere betrifft die Erfindung Tinten für Füllhalter.

Generell bezeichnet man Tinten als Farbflüssigkeiten mit unterschiedlicher Zusammensetzung und für vielerlei Anwendungsgebiete und Anwendungsarten. Als Tinten werden wäßrige, gelöste Farbstoffe und Bindemittel enthaltende Schreibflüssigkeiten seit alters her bezeichnet.

Bei den Tinten werden heute zumeist noch Farbstoffe verwendet wie Anilinblau, Armarin, Bismarckbraun, Rhodamin, Fuchsin, Phthalocyaninderivate, Methylenblau, Malachitgrün, Kristallviolett, Lichtgrün, Lichtblau, Eosin, Ponceau, Wasserblau. Anilinblau-Derivate, wie Tintenblau werden den Eisengallus-Tinten, den gebräuchlichsten Füllfederhaltertinten, zugesetzt.

Reine Farbstofftinten, die neben dem Farbstoff auch noch Verdikkungsmittel, wie Zucker, Dextrine etc. und Konservierungsmittel wie Formaldehyd und Phenol enthalten, weisen oft zur Verbesserung der Fließfähigkeit Polyethylenglykol und Wasser auf.

Zum Beschriften von Verpackungen etc. wurden neue Techniken entwickelt, die andersartige Zusammensetzungen der Tinten erforderten. Das bekannteste Beispiel hierfür ist das Inkjet- oder Tintenstrahlverfahren. Auch andere Entwicklungen auf dem Gebiet des Schreibens erforderten ein Variieren der Schreibmedien. Die Erfindung des Kugelschreiber und des Faserschreibers bzw. deren Kombinationen, des Tintenkugelschreiber führte zu neuartigen Tinten, die mit den herkömmlichen Schreibflüssigkeiten teilweise nur noch den Namen gemeinsam haben.

Bei den heute verbreiteten, meist in Tintenpatronen anzutreffenden Füllhaltertinten, werden reine Farbstofftinten verwendet. Von den gängigen Farbtönen Blau, Schwarz, Grün und Rot steht eindeutig der Farbton Blau im Vordergrund. Der färbende Bestandteil der blauen Tinte ist normalerweise Tinten- oder Wasserblau, ein Triarylmethanfarbstoff. Die Füllhaltertinten enthalten ebenfalls geringe Mengen an oberflächenaktiven Substanzen. Sie werden ebenfalls mit einer Gummiarabicumlösung zur besseren Haftung auf dem Papier versetzt.

Weiterhin müssen die Tinten mit Konservierungsstoffen wie beispielsweise Phenol konserviert werden. Um die Fließeigenschaften der Füllhaltertinte zu verbessern, werden üblicherweise den Tinten Feuchthaltemittel wie Glycerin, Glykol oder Sorbit etc. zugesetzt.

Bei den heute gebräuchlichen Kugelschreibern werden Farbpasten mit Viskositäten von 10 bis 20 Pas bei 20 °C und Oberflächenspannungen von 40 mN/m eingesetzt. Damit soll das Auslaufen und Herauskriechen der Paste aus dem Kugelspalt verhindert werden. Ein großer Teil der handelsüblichen Kugelschreiberpasten ist ausreichend beständig gegen Wasser, aber nicht UV-beständig.

Faserschreiber, heutzutage fälschlicherweise auch Filzschreiber genannt, schreiben mit flüssiger Tinte. Den Faserschreibertinten gemeinsam ist eine niedrige Viskosität (unter 4 mPas bei 25 °C und einer niedrigen Oberflächenspannung von etwa 30 mN/cm bei 25 °C.

Die wäßrigen Faserschreibertinten enthalten 10 bis 30 % Feuchthaltemittel wie Glykol oder Polyglykole.

Bei Tinten, die für das Tintenstrahlverfahren verwendet werden können, ist es wichtig, daß diese keine Teilchen über einen Mikrometer im Durchmesser enthalten. Sie dürfen bei Stillstand an der Düsenöffnung nicht antrocknen und auch über längere Zeit nicht verkrusten. Wichtige Parameter der Tinten für das Tintenstrahlverfahren sind die Viskosität, die Oberflächenspannung, die Leitfähigkeit und der pH-Wert.

Die US-A 4,365,035 offenbart eine wässrige, pigmenthaltige Tinte zur Verwendung in Tintenstrahldruckern, die eine Acrylpolymerdispersion als Fixiermittel zur Verbesserung der Wasserbeständigkeit enthält. Das Acrylpolymer ist beispielsweise thermoplastisch.

Die EP-A-0 685 538 betrifft eine wässrige Tinte zur Verwendung in einem Kugelschreiber auf der Basis einer eingefärbten Polymerdispersion. Das Polymer ist beispielsweise ein Acrylpolymer.

Die bekannten Tinten haben jedoch allesamt den Nachteil, daß sie weder UV- noch wasserbeständig sind.

Daher ist es Aufgabe der vorliegenden Erfindung neuartige pigmentfreie UV- und wasserbeständige Farbflüssigkeiten bereitzustellen, die insbesondere für Faser-, Filz- und Kugelschreiber sowie für Füllthalter eingesetzt werden können. Bei entsprechender Anpassung der Viskosität bzw. Oberflächenspannung sollen diese Farbflüssigkeiten bzw. Tinten auch im Tintenstrahlverfahren eingesetzt werden können.

Die obige Aufgabe wird gelöst durch die pigmentfreie, UV- und wasserbeständige Farbflüssigkeit gemäß Anspruch 1, die eine wäßrige Suspension bzw. Lösung von Farbstoffen, Bindemitteln sowie üblichen Hilfs- und Zusatzstoffen enthält. Die erfindungsgemäße Farbflüssigkeit bzw. Tinte enthält folgende Komponenten:
(I) 17,3 bis 23,8, insbesondere 19,8 Vol.-% Basistinten lösung,
(II) 39,7 bis 52,9, insbesondere 46,3 Vol.-%, einer wäßrigen Dispersion thermoplastischer und selbstvernetzender Acrylpolymerer als Bindemittel und UV-Filter, insbesondere Plextol®,
(III) 4,7 bis 5,8, insbesondere 5,3 Vol.-%, Ethanol,
(IV) 20,6 bis 21,7, insbesondere 21,2 Vol.-%, Wasser,
(V) 2,6 bis 6,6, insbesondere 3,9 Vol.-%, eines basischen Hilfsstoffs,
(VI) 2,6 bis 6,6, insbesondere 3,3 Vol.-%, Verdickungsmittel, insbesondere Ahornsirup,
wobei sich die Komponenten (I) bis (II) auf 100 Vol.-% addieren.

In den weiteren Unteransprüchen sind vorteilhafte Ausführungsformen der Erfindung enthalten.

Der zugesetzte basische Hilfsstoff (V) kann ausgewählt sein aus der Gruppe, die aus Natriumhydrogencarbonat, Natriumcarbonat und Kaliumcarbonat besteht, wobei Natriumhydrogencarbonat bevorzugt wird. Erfindungsgemäß wird eine 70 %ige Natriumhydrogencarbonatlösung eingesetzt.

Dem als Verdickungsmittel (VI) verwendeten Ahornsirup wird Essigsäure zugesetzt, um eine Verbindung mit dem selbstvernetzenden Acrylpolymer, insbesondere Plextol®, zu ermöglichen.

Um die notwendige Viskosität der erfindungsgemäßen Farbflüssigkeiten bzw. Tinten einzustellen, können diese noch mit Wasser und/oder Alkohol verdünnt werden. Für Faserschreibertinten ist es insbesondere notwendig niedrige Viskositäten von unter 4 mPas bei 25 °C und Oberflächenspannungen von 30 mN/cm bei 25 °C einzustellen. Den Tinten werden daher geringe Mengen oberflächenaktiver Substanzen zugesetzt. Weiterhin können den erfindungsgemäßen pigmentfreien Farbflüssigkeiten Konservierungsmittel zugesetzt werden. Die Basistintenlösung (I) enthält daher Konservierungsmittelmengen bis zu 0,5 Gew.-%, wobei vorzugsweise Phenol oder Formaldehyd eingesetzt werden.

Die Viskosität von Kugelschreiberpasten wird üblicherweise im Bereich von 10 bis 20 Pas bei 25 °C eingestellt. Als Verdickungsmittel kann insbesondere Polyvinylpyrrolidon eingesetzt werden, um Viskositäten von 40 mN/m zu erreichen.

Überraschenderweise hat sich nun gezeigt, daß die erfindungsgemäßen pigmentfreien Tinten gegenüber Vergleichstinten aus dem Stand der Technik sowohl in hohem Maße UV- als auch wasserbeständig sind. Ebenfalls zeigte sich, daß die erfindungsgemäßen Tinten eine hervorragende Säurebeständigkeit aufwiesen: auf Papier nach DIN 16554 (Dokumentenechtheit) war die erfindungsgemäße pigmentfreie Mustertinte gemäß Anspruch 1 säurebeständig und erfüllte die DIN-Anforderung ohne Farbänderung. Die Tinte gemäß Stand der Technik der Firma Edding AG war dagegen von einem brilliantroten Farbton in trübes stumpfes Organgerot umgewandelt.

Die Erfindung wird nun anhand der folgenden Beispiele näher beschrieben, ohne die Erfindung darauf einzuschränken.

### Beispiel 1

### Herstellung einer erfindungsgemäßen pigmentfreien, UV- und wasserbeständigen Tinte

Zunächst wurden 35 ml Plextol® (Plextol ist ein Handelsprodukt der Firma Röhm, Darmstadt), das als Bindemittel und UV-Filter wirkt, mit 16 ml Wasser sowie 4 ml Ethanol (100 %) in einem Becherglas unter Rühren gemischt. In einem zweiten Becherglas wurde die Basistintenlösung (I) mit 3 ml einer 70 %igen Natriumhydrogencarbonatlösung sowie mit 2 ml Ahornsirup versetzt und etwa 10 Minuten gerührt. Daraufhin wurden die beiden Lösungen miteinander vermischt und ergaben die fertige pigmentfreie erfindungsgemäße Tinte. Zur Anpassung der Viskosität kann diese Tintenlösung noch durch Wasser weiter verdünnt werden.

Die eingesetzte Basistintenlösung (I) mit dem Farbstoff Wasserblau hatte folgende Zusammensetzung:
17,0 g Feuchthaltemittel
2,5 g Schwefelsäure (94 bis 95 %)
5 g Wasserblau, 0,1 g Tensid
0,5 g Konservierungsmittel
Rest Wasser (aufgefüllt auf ein Kilogramm).

Die Basistintenlösung (I) wurde wie folgt hergestellt. Das Feuchthaltemittel, üblicherweise Glycerin oder Sorbit wird mit Wasser verdünnt, Schwefelsäure wird hinzugegeben und der Farbstoff wird dann in die Mischung eingerührt. Die sich ergebende Flüssigkeit wird auf 80 °C erhitzt, gerührt bis der Farbstoff sich vollständig löst. Nach dem Abkühlen werden die Tenside und das Konservierungsmittel Phenol hinzugefügt. Diese Lösung ist dann gebrauchsfertig.

## Patentansprüche

1. Pigmentfreie UV- und wasserbeständige Farbflüssigkeit für Faser-, Filz-, Kugelschreiber, Füllhalter sowie für Tintenstrahlverfahrert, insbesondere Tinte, aus einer wäßrigen Lösung bzw. Suspension von Farbstoffen, Bindemitteln, Konservierungsstoffen sowie den üblichen Hilfs- und Zusatzstoffen, **dadurch gekennzeichnet, daß** die Farbflüssigkeit folgende Komponenten enthält:
(I) 17,3 bis 23,8, insbesondere 19,8 Vol.-%, Basistintenlösung,
(11) 39,7 bis 52,9, insbesondere 46,3 Vol.%, einer wäßrigen Dispersion thermoplastischer oder selbstvernetzender Acrylpolymerer als Bindemittel und UV-Filter, insbesondere Plextol®,
(III) 4,7 bis 5,8, insbesondere 5,3 Vol.%, Ethanol,
(IV) 20,6 bis 21,7, insbesondere 21,2 Vol.-%, Wasser,
(V) 2,6 bis 6,6, insbesondere 3,9 Vol.-%, eines basischen Hilfsstoffs,
(VI) 2,6 bis 6,6, insbesondere 3,3 Vol.-% Ahornsirup,
wobei sich die Komponenten (I) bis (VI) auf 100 Vol.-% addieren.

2. Farbflüssigkeit nach Anspruch 1, **dadurch gekennzeichnet, daß** sie als basischen Hilfsstoff 2,6 bis 6,6, insbesondere 3,9 Vol.-% einer wäßrigen Natriumhydrogencarbonatlösung enthält.

3. Farbflüssigkeit nach einem der Ansprüche 1 oder 2, **dadurch gekennzeichnet, daß** die Basistintenlösung (I) 10 bis 30 Gew.-% eines Feuchthaltemittels enthält.

4. Farbflüssigkeit nach einem der vorhergehenden Ansprüche 1 bis 3, **dadurch gekennzeichnet, daß** die Basistintenlösung (I) 0,5 Gew.-% eines Konservierungsmittels enthält.

5. Farbflüssigkeit nach einem der vorhergehenden Ansprüche 1 bis 4, **dadurch gekennzeichnet, daß** sie eine Viskosität von unter 4 mPas bei 25 °C und eine Oberflächenspannung von etwa 30 mN/cm bei 25 °C aufweist.

6. Farbflüssigkeit nach einem der Ansprüche 1 bis 4, **dadurch gekennzeichnet, daß** sie eine Viskosität von 10 bis 20 Pas bei 20 °C sowie eine Oberflächenspannung von 40 mN/m bei 20 °C aufweist.

7. Farbflüssigkeit gemäß Anspruch 6, **dadurch gekennzeichnet, daß** sie weitere Verdickungsmittel aus der Gruppe Polyvinylpyrrolidon und der Polyacrylverbindungen enthält.

## Claims

1. A non-pigmented UV and water-fast colored liquid for fiber-tip, felt-tip and ball-point pens, fountain pens as well as for ink-jet printing, more particularly ink, comprising an aqueous solution or suspension of dyes, vehicle, stabilizers as well as the usual auxiliaries and additives, **characterized in that** the colored liquid contains the following constituents:
(I) 17.3 to 23,8, more particularly 19.8 % by vol. base ink solution,
(II) 39.7 to 52.9, more particularly 46.3 % by vol. of an aqueous dispersion of thermoplastic and self-crosslinking acrylic polymers serving as vehicle, and UV filter, more particularly, Plextol®,
(III) 4.7 to 5.8, more particularly 5.3 % by vol. ethanol,
(IV) 20.6 to 21.7, more particularly 21.2 % by vol., water,
(V) 2.6 to 6.6, more particularly 3.9 % by vol. of a basic auxiliary,
(V) 2.6 to 6.6, more particularly 3.3 % by vol. thickener, more particularly maple syrup,
the constituents (I) to (VI) adding to 100 % by volume.

2. The colored liquid as set forth in claim 1, **characterized by** it containing 2.6 to 6.6, more particularly 3.9 % by vol. of an aqueous solution of sodium hydrogen carbonate as the base auxiliary.

3. The colored liquid as set forth in claim 1 or 2, **characterized by** the base ink solution (I) containing 10 to 30 % by weight of a humectant.

4. The colored liquid as set forth in any of the preceding claims 1 to 3, **characterized by** the base ink solution (I) containing 0.5 % by weight of a stabilizer.

5. The colored liquid as set forth in any of the preceding claims 1 to 4, **characterized by** it having a viscosity of less than 4 mPas at 25°C and a surface tension of approx. 30 mN/cm at 25°C.

6. The colored liquid as set forth in any of the preceding claims 1 to 4, **characterized by** it having a viscosity of 10 to 20 Pas at 20°C and a surface tension of 40 mN/m at 20°C.

7. The colored liquid as set forth in claim 6, **characterized by** it containing further thickeners from the group polyvinyl pyrrolidone and polyacryl compounds.

## Revendications

1. Liquide colorant exempt de pigments et résistant aux rayonnements ultraviolets et à l'eau, pour pointes d'écriture à fibres, à feutre, à bille, pour porte-plume ainsi que pour les procédés à jet d'encre, en particulier encre, formé d'une solution ou d'une suspension aqueuse de produits colorants, de liant, de produits de conservation ainsi que des produits auxiliaires et additionnels habituels, **caractérisé en ce que** le liquide colorant contient les composants suivants :
(I) 17,3 à 23,8, en particulier 19,8 % en volume de solution d'encre de base,
(II) 39,7 à 52,9, en particulier 46,3 % en volume d'une dispersion aqueuse d'acryl-polymère thermoplastique ou auto-réticulant à titre de liant et de filtre aux rayonnements ultraviolets, en particulier du Plextol®,
(III) 4,7 à 5,8, en particulier 5,3 % en volume d'éthanol,
(IV) 20,6 à 21,7, en particulier 21,2 % en volume d'eau,
(V) 2,6 à 6,6, en particulier 3,9 % en volume d'un produit auxiliaire basique,
(VI) 2,6 à 6,6, en particulier 3,3 % en volume de sirop d'érable,
dans lequel les composants (I) à (VI) s'additionnent à 100 % en volume.

2. Liquide colorant selon la revendication 1, **caractérisé en ce qu'**il contient à titre de produit auxiliaire basique 2,6 à 6,6, en particulier 3,9 % en volume d'une solution aqueuse de carbonate de sodium hydrogéné.

3. Liquide colorant selon l'une ou l'autre des revendications 1 et 2, **caractérisé en ce que** la solution d'encre de base (I) contient 10 à 30 % en poids d'un agent humectant.

4. Liquide colorant selon l'une des revendications précédentes 1 à 3, **caractérisé en ce que** la solution d'encre de base (I) contient 0,5 % en poids d'un agent de conservation.

5. Liquide colorant selon l'une des revendications précédentes 1 à 4, **caractérisé en ce qu'**il présente une viscosité inférieure à 4 mPas à 25 °C et une tension superficielle d'environ 30 mN/cm à 25 °C.

6. Liquide colorant selon l'une des revendications 1 à 4, **caractérisé en ce qu'**il présente une viscosité de 10 à 20 Pas à 20 °C et une tension superficielle de 40 mN/m à 20 °C.

7. Liquide colorant selon la revendication 6, **caractérisé en ce qu'**il contient en outre des agents épaississants du groupe formé par le polyvinyle pyrrolidone et les composés polyacryliques.
